# EUROPEAN PATENT APPLICATION

(11) **EP 3 936 299 A1**
(43) Date of publication of application: **12.01.2022**
(21) Application number: 20793944.8
(22) Date of filing: 24.03.2020
(51) Int. Cl.: B29C 39/24, B29C 39/26, B29C 39/38, B29C 69/02, B29C 64/112, B29C 64/118, B29C 64/153, B29C 33/38

(54) **RESIN MOLDING METHOD**

(30) Priority: 26.04.2019 JP 2019085241; 26.04.2019 JP 2019085242; 25.02.2020 JP 2020029557; 25.02.2020 JP 2020029558
(71) Applicant: micro-AMS Inc., Kawasaki City, Kanagawa 212-0032 (JP)
(72) Inventor: KURIHARA, Fumio, Kanagawa 212-0032 (JP); KAGAWA, Shingo, Kanagawa 212-0032 (JP)
(74) Representative: Kramer Barske Schmidtchen Patentanwälte PartG mbB
(86) International application number: PCT/JP2020/013086
(87) International publication number: WO 2020/217822

(57) **Abstract**

Provided is a resin molding method capable of reducing the use amount of micropellets and obtaining a resin molded article having required characteristics. A resin molding method includes a disposing step of disposing a preliminary molded body (2) laminated and formed in a three-dimensional shape in a molding die (3), a filling step of heating and melting the preliminary molded body (2) by an electromagnetic wave transmitted through the molding die (3) and filling the molding die (3) with a molten resin material (20), and a cooling step of cooling and solidifying the molten resin material (20) in the molding die (3). In the cooling step, a resin molded article integrated so as to eliminate a lamination interface (21) of the preliminary molded body (2) is formed in the molding die (3).

## Description

### TECHNICAL FIELD

The present disclosure relates to a resin molding method of radiating electromagnetic waves to form a resin molded article.

### BACKGROUND ART

Examples of the method of forming a resin molded article of a thermoplastic resin include an injection molding method, a blow molding method, and a press molding method. In these molding methods, a metal die that is a molding die made of metal is used, and it is necessary to three-dimensionally cut a metal material when producing the metal die, and this cutting takes time and effort. On the other hand, as a molding method that enables molding of a thermoplastic resin without using a molding die, there is a laminate shaping method known as a 3D printer or the like. In the laminate shaping method, a molding die is unnecessary, but a lamination interface remains in the formed resin molded article, which is a disadvantage in characteristics. In addition, as a molding method that enables molding of a thermoplastic resin using a molding die made of a non-metallic material, for example, there is a method of molding a thermoplastic resin molded article disclosed in Patent Literature 1.

In the method of molding a thermoplastic resin molded article of Patent Literature 1, a rubber die is used in place of the metal die, and the thermoplastic resin in the rubber die is heated by an electromagnetic wave emitted from the surface of the rubber die to obtain the thermoplastic resin molded article. A method of forming a molded article of a thermoplastic resin in a molding die using the electromagnetic wave is referred to as an electromagnetic wave irradiation molding method for convenience. Further, in the method of molding a thermoplastic resin molded article of Patent Literature 1, a first thermoplastic resin in a solid state having a shape along part of the cavity is disposed in part of the cavity of the rubber die, and a second thermoplastic resin in a solid state, a particle state, or a molten state is disposed in the remaining portion of the cavity, and a thermoplastic resin molded article in which the first thermoplastic resin and the second thermoplastic resin are integrated is obtained.

### CITATION LIST

### Patent Literature

Patent Literature 1: JP 2011 -140218 A

### SUMMARY OF INVENTION

### SOLUTION TO PROBLEM

However, in the electromagnetic wave irradiation molding method of Patent Literature 1 and the like, when a particulate thermoplastic resin is used, it is necessary to use micropellets obtained by further refining pellets of the thermoplastic resin as a raw material. The production of the micropellets takes time and effort, and is unsuitable when small-lot production of resin molded articles is performed.

Further, the electromagnetic wave irradiation molding method of Patent Literature 1 does not disclose that the thermoplastic resin in a solid state formed by what molding method is used. When a thermoplastic resin in a solid state formed by irradiation with electromagnetic waves is used, it is necessary to use micropellets as a raw material.

In addition, in the resin molded article formed by the conventional laminate shaping method, there are problems that the strength in the laminating direction is low, the density of the resin molded article is low, and there are steps or unevenness on the surface of the resin molded article because a lamination interface remains in the molded resin molded article. Therefore, in the resin molded article formed by the laminate shaping method, a resin molded article having required characteristics may not be obtained.

The present disclosure has been made in view of such problems, and has been obtained in order to provide a resin molding method capable of reducing the use amount of micropellets and obtaining a resin molded article having required characteristics.

### [Means for Solving the Problem]

According to one aspect of the present disclosure, a resin molding method includes a disposing step of disposing one or a plurality of preliminary molded bodies laminated and formed in a three-dimensional shape in a molding die, a filling step of heating and melting the preliminary molded body by an electromagnetic wave transmitted through the molding die or an alternating electric field applied by a pair of electrodes to fill the molding die with a molten material, and
a cooling step of cooling and solidifying the molten material in the molding die to form a resin molded article in the molding die in which the material is integrated such that a lamination interface of the preliminary molded body disappears.

### ADVANTAGEOUS EFFECTS OF INVENTION

In the resin molding method according to the one aspect, a resin molded article is formed in a molding die using an electromagnetic wave or an alternating electric field by using one or a plurality of preliminary molded bodies laminated and formed in a three-dimensional shape as raw materials. Hereinafter, a method of forming a resin molded article in a molding die using an electromagnetic wave or an alternating electric field, which is referred to as a filling step, is referred to as an electromagnetic wave molding or an electromagnetic wave molding method. Specifically, in the disposing step, one or a plurality of preliminary molded bodies laminated and formed in a three-dimensional shape is disposed in a molding die. Examples of the preliminary molded body include a laminate of a thread-like material and a laminate of a granular material.

Next, in the filling step, the preliminary molded body is heated and melted by the electromagnetic wave transmitted through the molding die or the alternating electric field applied by the pair of electrodes, and the molding die is filled with the molten material. In the cooling step, the molten material is cooled and solidified in the molding die. When the filling step and the cooling step are performed, a resin molded article integrated so as to eliminate the lamination interface of the preliminary molded body is formed in the molding die.

In the resin molding method according to the one aspect, the preliminary molded body having the lamination interface can be formed by a conventional laminate shaping method (may be referred to as a 3D printer, an additive manufacturing (AM), or the like). In the conventional laminate shaping method, it is possible to mold a resin without using granular micropellets smaller than solid pellets. Therefore, it is possible to save time and effort for manufacturing the micropellets. In the disposing step, in order to improve the shape and the like of the resin molded article to be formed, it is possible to use micropellets as a powder material.

The molding die used in the resin molding method can be produced using a non-metallic material such as a rubber material, a curable resin material, a cement material, or a gypsum material. Therefore, it is easy to produce a molding die, and the resin molding method of the one aspect is also suitable for production of a small lot.

Further, in the resin molded article obtained by the electromagnetic wave molding method using the preliminary molded body, characteristics that cannot be obtained in the resin molded article obtained by the laminate shaping method can be obtained. Specifically, according to the resin molding method, it is possible to solve the problems in the resin molded article formed by the laminate shaping method, such as the problem that the strength in the laminating direction is low due to the presence of the lamination interface, the problem that the density of the resin molded article is low, and the problem that the surface of the resin molded article has steps or unevenness.

In addition, for example, even for a type of resin material for which it is difficult to produce micropellets, such as a resin material having low hardness, the electromagnetic wave molding is performed using a preliminary molded body formed by a conventional laminate shaping method, whereby a resin molded article having almost no lamination interface can be obtained.

As described above, according to the resin molding method of the one aspect, the use amount of micropellets can be reduced, and a resin molded article having required characteristics can be obtained.

In the disposing step, when the shape of the resin molded article to be formed is not so complicated, one preliminary molded body along the shape of the cavity of the molding die can be disposed in the molding die. In this case, in the filling step and the cooling step, the entire preliminary molded body can be melted to obtain a resin molded article.

In the disposing step, when the shape of the resin molded article to be formed is complicated, a plurality of preliminary molded bodies can be disposed in the molding die along the shape of each portion of the cavity of the molding die. In this case, in the filling step and the cooling step, the plurality of preliminary molded bodies is melted, and the preliminary molded bodies are bonded to each other at the interface portion where the preliminary molded bodies face each other, so that a resin molded article can be obtained.

### BRIEF DESCRIPTION OF DRAWINGS

Fig. 1 is an explanatory diagram showing a state in which a preliminary molded body is disposed in a molding die in a disposing step of a resin molding method according to the embodiment.
Fig. 2 is an explanatory diagram illustrating part of Fig. 1 in an enlarged manner.
Fig. 3 is an explanatory diagram illustrating a state in which a resin molded article is formed in a molding die in a filling step and a cooling step of the resin molding method according to the embodiment.
Fig. 4 is an explanatory diagram illustrating part of Fig. 3 in an enlarged manner.
Fig. 5 is an explanatory diagram illustrating a fused deposition modeling device according to the embodiment.
Fig. 6 is an explanatory diagram illustrating an extrusion molding device according to the embodiment.
Fig. 7 is an explanatory diagram showing an ink jet device according to the embodiment.
Fig. 8 is an explanatory diagram illustrating a selective laser sintering device according to the embodiment.
Fig. 9 is an explanatory diagram illustrating an ultrasonic powder molding device according to the embodiment.
Fig. 10 is an explanatory diagram illustrating a nylon casting device according to the embodiment.
Fig. 11 is an explanatory diagram illustrating a preliminary molding device including a preliminary molding die and an electromagnetic wave generator according to the embodiment.
Fig. 12 is an explanatory diagram schematically showing, in an enlarged manner, a state in which the granular materials are bonded to each other at the interface of the surface portion according to the embodiment.
Fig. 13 is an explanatory diagram schematically illustrating, in an enlarged manner, a state in which the preliminary molded body is disposed in the cavity of the molding die according to the embodiment.
Fig. 14 is an explanatory diagram illustrating another preliminary molding device that forms a granular material layer on a stage according to the embodiment.
Fig. 15 is an explanatory diagram illustrating another preliminary molding device that irradiates the granular material layer on the stage with convergent light according to the embodiment.
Fig. 16 is a plan view illustrating another preliminary molding device according to the embodiment.
Fig. 17 is an explanatory diagram illustrating a state in which a resin molded article is formed in another molding die in the filling step and the cooling step of the resin molding method according to the embodiment.
Fig. 18 is an explanatory diagram illustrating another electromagnetic wave molding device according to the embodiment.

### DESCRIPTION OF EMBODIMENTS

### <Embodiment>

Preferred embodiments according to the resin molding method described above will be described with reference to the drawings.

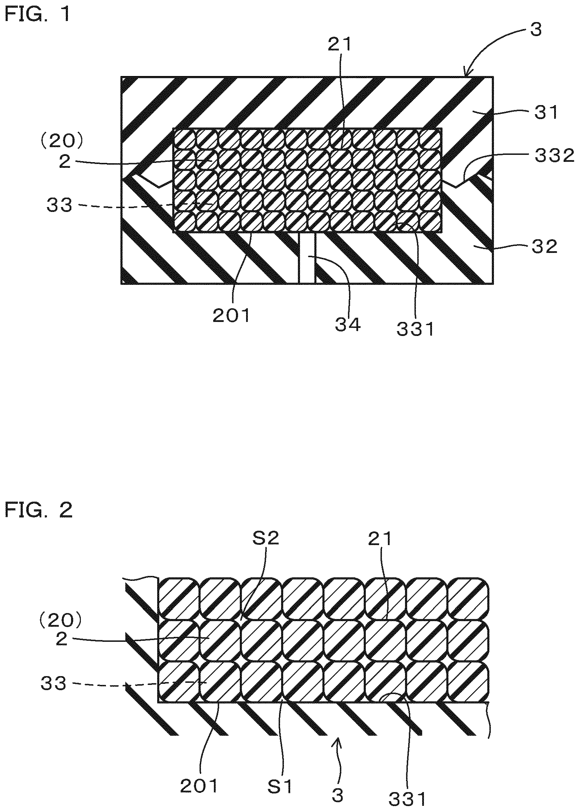

In the resin molding method of the present embodiment, the disposing step, the filling step, and the cooling step are performed to form (produce) a resin molded article 1 of the thermoplastic resin. As shown in Figs. 1 and 2, in the disposing step, one or a plurality of resin preliminary molded bodies 2 formed by laminating a material in a three-dimensional shape is disposed in a molding die 3.

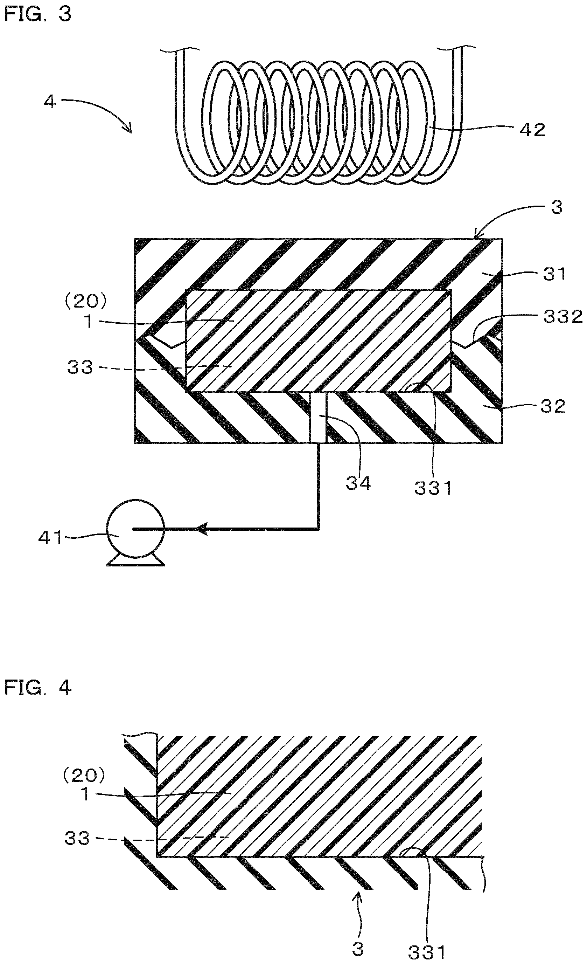

As shown in Figs. 3 and 4, in the filling step, a resin preliminary molded body 2 is heated and melted by the electromagnetic wave transmitted through the molding die 3, and the molding die 3 is filled with a melted resin material 20. In the cooling step, the molten resin material 20 is cooled and solidified in the molding die 3, and the resin molded article 1 in which the resin material 20 is integrated so that the lamination interface 21 of the preliminary molded body 2 disappears in the molding die 3 is formed.

Figs. 1 and 2 schematically show cross sections of a plurality of resin materials 20 laminated in the preliminary molded body 2. In addition, Figs. 3 and 4 schematically illustrate a state in which a plurality of laminated resin materials 20 is melted and integrated.

Hereinafter, the resin molding method of the present embodiment will be described in detail.

In the resin molding method of the present embodiment, electromagnetic wave molding for forming the resin molded article 1 in the molding die 3 using an electromagnetic wave is performed, and the preliminary molded body 2 formed (shaped) by the laminate shaping method is used as a raw material to be disposed in the molding die 3 when the electromagnetic wave molding is performed.

### (Preliminary molded body 2)

As shown in Fig. 2, the preliminary molded body 2 is a laminate in a three-dimensional shape by various laminate shaping methods, and is composed of a molded body of a thermoplastic resin. The laminate shaping method is a method of forming (shaping) the resin molded article 1 using various 3D printers (AM: additive manufacturing) in which the thermoplastic resin material ejected in a thread-like (linear) or granular manner from each of the nozzle 511, 521, and 531 is laminated in a three-dimensional shape.

Examples of the laminate shaping method include a fused deposition modeling (FDM) (material extrusion laminate method), an extrusion molding method, an inkjet method, and a selective laser sintering (SLS). Examples of the method of forming the preliminary molded body 2 for constituting part of the resin molded article 1 include an ultrasonic powder molding method and a nylon casting method.

### (Fused deposition modeling)

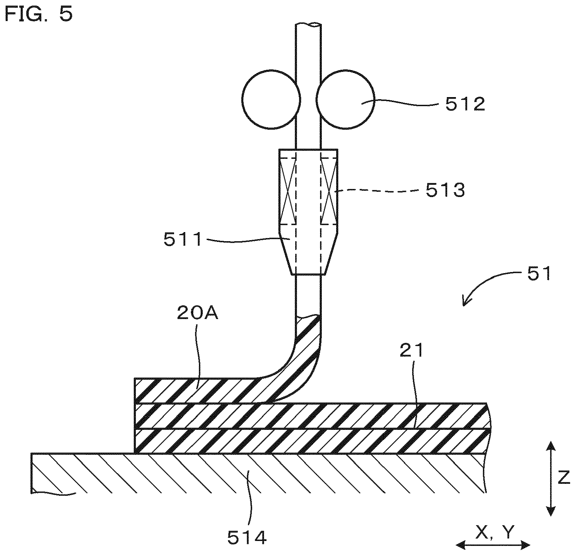

As shown in Fig. 5, in the fused deposition modeling, a filament (resin material) 20A made of an elongated (thread-like) thermoplastic resin is ejected from the nozzle 511 in a heated and melted state using a fused deposition modeling device 51, and is laminated on a table 514 in a three-dimensional shape. More specifically, the fused deposition modeling device 51 includes the nozzle 511 that is movable in planar directions (horizontal directions) X and Y as the X direction and the Y direction, a supply device 512 that supplies the filament 20A to the nozzle 511, a heating device 513 that heats the filament 20A supplied to the nozzle 511, and the table 514 that moves in a vertical direction (vertical direction) Z as the Z direction orthogonal to the planar directions X and Y, and laminates the filament 20A ejected from the nozzle 511.

Then, the molten filament 20A ejected from the nozzle 511 moving in the planar directions X and Y is sequentially laminated in the vertical direction Z on the table 514 moving stepwise in the vertical direction Z and on the filament 20A already laminated on the table 514, whereby the three-dimensional preliminary molded body 2 is obtained. In the preliminary molded body 2 formed by the fused deposition modeling, the thread-like resin material 20 is laminated with a lamination interface 21 interposed therebetween.

In the fused deposition modeling, the preliminary molded bodies 2 of various thermoplastic resins can be formed. In the fused deposition modeling, for example, PLA (polylactic acid resin), ABS (acrylonitrile-butadienestyrene copolymer resin), TPU (thermoplastic polyurethane resin), HIPS (impact resistant polystyrene resin), PET/G (glycol-modified polyethylene terephthalate resin), PC (polycarbonate resin), PA (polyamide resin), PVA (polyvinyl alcohol resin), PP (polypropylene resin), and the like can be used for formation.

### (Extrusion molding method)

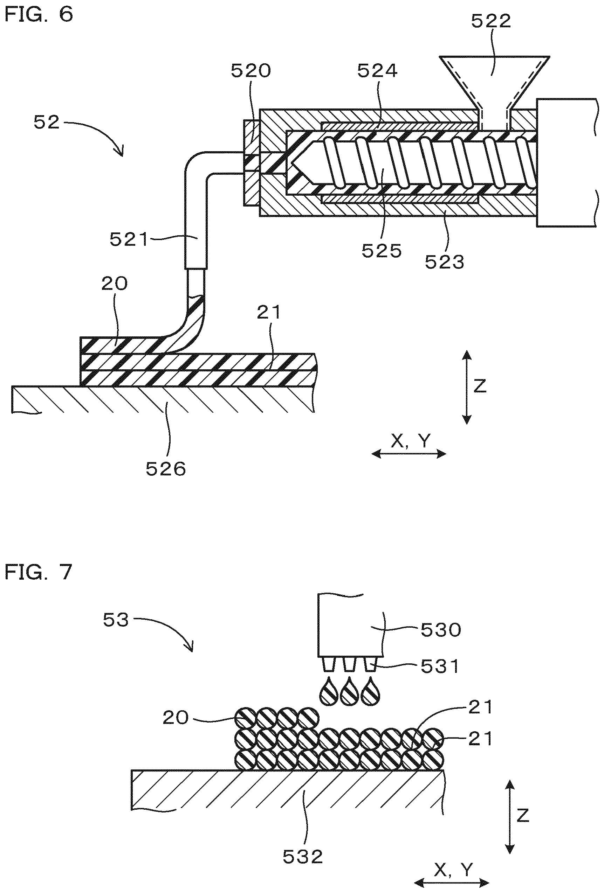

As shown in Fig. 6, in the extrusion molding method, the thread-like resin material 20 obtained by heating and melting a solid or a powder and granular material of a thermoplastic resin is extruded from the nozzle 521 provided in a die 520 of an extrusion molding device 52 and laminated on a table 526 in a three-dimensional shape. More specifically, the extrusion molding device 52 includes a charging port 522 for charging the resin material 20 in a solid or a powder and granular material, a cylinder 523 in which the resin material 20 charged from the charging port 522 is stored, a heating device 524 for heating the resin material 20 in the cylinder 523, a screw 525 for kneading the resin material 20 in the cylinder 523, the die 520 and the nozzle 521 from which the resin material 20 is extruded in a thread-like shape by the rotation of the screw 525, and the table 526 on which the resin material 20 extruded from the die 520 and the nozzle 521 is laminated in a three-dimensional shape.

Then, the resin material 20 ejected from the nozzle 521 is sequentially laminated in the vertical direction Z on the table 526 moving in the planar directions X and Y and on the resin material 20 already laminated on the table 526, whereby the three-dimensional preliminary molded body 2 is obtained. In the preliminary molded body 2 formed by the extrusion molding method, the thread-like resin material 20 is laminated with the lamination interface 21 interposed therebetween.

In the extrusion molding method, thermoplastic resins similar to the thermoplastic resins listed in the fused deposition modeling can be molded.

### (Ink jet method)

As shown in Fig. 7, in the ink jet method, the liquid resin material 20 is dropped and solidified on a table 532 and laminated on the table 532 in a three-dimensional shape using an ink jet device 53. More specifically, the ink jet device 53 includes the nozzle 531 of a nozzle head 530 that moves in the planar directions (horizontal directions) X and Y as the X direction and the Y direction and drops the liquid resin material 20, and the table 532 that moves in the vertical direction (vertical direction) Z as the Z direction orthogonal to the planar directions X and Y and laminates the liquid resin material 20 dropped from the nozzle 531 of the nozzle head 530. Furthermore, the ink jet device 53 may include a cutting roller that cuts the upper layer portion of the liquid resin material 20 dropped on the table 532 to flatten the surface of the resin material 20.

Then, the resin material 20 dropped from the nozzle 531 of the nozzle head 530 moving in the planar directions X and Y is sequentially laminated in the vertical direction Z on the table 532 moving stepwise in the vertical direction Z and on the resin material 20 already laminated on the table 532, whereby the three-dimensional preliminary molded body 2 is obtained. In the preliminary molded body 2 formed by the inkjet method, the granular resin material 20 is laminated in the planar directions X and Y and the vertical direction Z with the lamination interface 21 interposed therebetween.

In the ink jet method, in addition to the shaping wax, a thermoplastic resin that is easily solidified can be used for shaping.

### (Selective laser sintering)

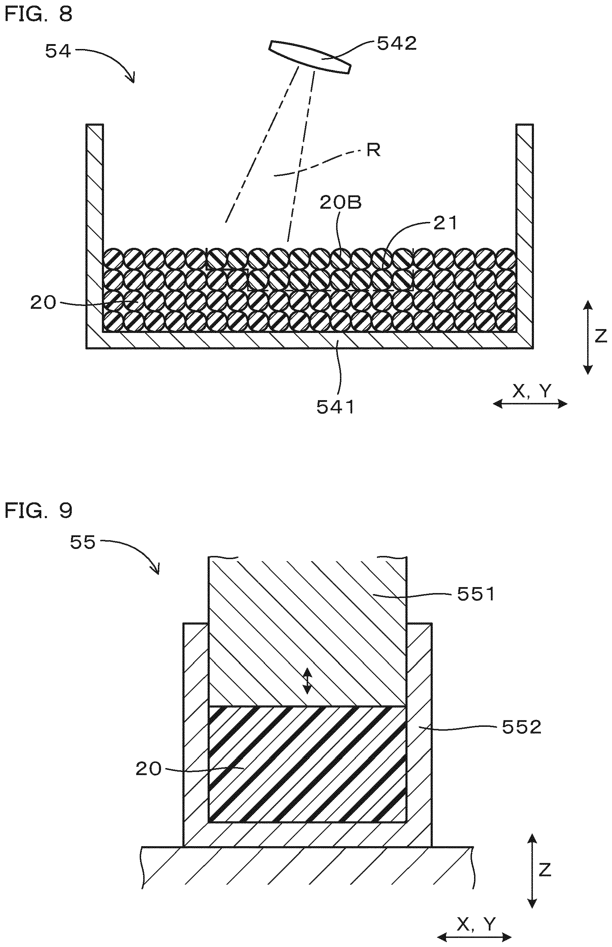

As illustrated in Fig. 8, in the selective laser sintering, the powdery resin material 20 is irradiated with a laser R using a selective laser sintering device 54, a portion of the resin material 20 irradiated with the laser R is heated and sintered, and the resin material 20 is shaped into a three-dimensional shape with a sintered resin portion 20B. The selective laser sintering device 54 includes a container 541 that moves stepwise in the vertical direction Z as the Z direction and stores the powdery resin material 20, and a laser irradiation device 542 that moves a laser R such as a CO2 laser in planar directions X and Y as the X direction and the Y direction orthogonal to the vertical direction Z by a lens to irradiate the powdery resin material 20 in the container 541.

While the powdered resin material 20 in the container 541 is sintered (solidified) by the laser R moving in the planar directions X and Y, and the container 541 is moved stepwise in the vertical direction Z, the sintered resin portions 20B are laminated, whereby the three-dimensional preliminary molded body 2 is obtained. In the preliminary molded body 2 shaped (formed) by the selective laser sintering, the powdery (granular) resin material 20 is laminated in the planar directions X and Y and the vertical direction Z with the lamination interface 21 interposed therebetween.

The selective laser sintering device 54 according to a method of the selective laser sintering can shape the three-dimensional preliminary molded body 2 using a unit that applies heat such as a halogen lamp (near infrared ray) instead of using the laser R, and using a fusing agent (dissolution accelerator) and a detailing agent (surface decorative agent). More specifically, in the selective laser sintering device 54, a fusing agent and a detailing agent are injected onto a powdery thermoplastic resin, and the injected portion is heated and melted by the near infrared ray or the like to fuse the powdery thermoplastic resins. Then, a step of spreading the powdery thermoplastic resin in layers, a step of injecting the fusing agent and the detailing agent, and a step of heating the injected portion can be repeated to form the preliminary molded body 2 having a desired shape. According to the selective laser sintering device 54, it is possible to obtain a high-quality preliminary molded body 2 at high speed.

In the selective laser sintering, for example, PA12 (polyamide12 resin), glass bead-added PA12, PA11 (polyamide11 resin), PA6 (polyamide6 resin), PP (polypropylene resin), TPE (thermoplastic elastomer resin), PS (polystyrene resin) for lost wax, and the like can be used for shaping.

### (Ultrasonic powder molding method)

As illustrated in Fig. 9, in the ultrasonic powder molding method, using an ultrasonic powder molding device 55, a powdery resin material 20 is melted by a horn 551 that ultrasonically vibrates and an ultrasonic molding die 552 is filled therewith, and a three-dimensional molded body is formed (shaped) in the ultrasonic molding die 552. The ultrasonic powder molding device 55 includes the horn 551 that melts a powdery resin material 20 by ultrasonic vibration, and the ultrasonic molding die 552 filled with the molten resin material 20.

In the molded body formed by the ultrasonic powder molding method, the lamination interface 21 is hardly formed. The molded body formed by the ultrasonic powder molding method can be used in the disposing step as the preliminary molded body 2 constituting part of the resin molded article 1 together with the preliminary molded body 2 formed by another laminate shaping method. In this case, when the filling step and the cooling step are performed, the lamination interface 21 in the preliminary molded body 2 formed by another laminate shaping method is eliminated, and this preliminary molded body 2 and a preliminary molded body 2 formed by the ultrasonic powder molding method are melted and joined at the boundary portion between the preliminary molded bodies 2.

In the ultrasonic powder molding method, various thermoplastic resins can be molded.

### (Nylon casting method)

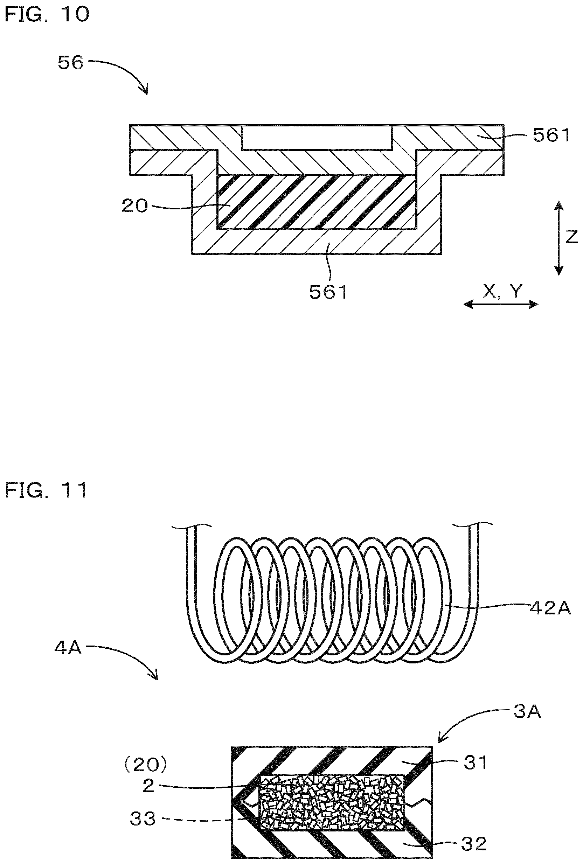

As shown in Fig. 10, in the nylon casting method, a liquid nylon monomer is polymerized in a rubber die 561 using a nylon casting device 56, and a three-dimensional molded body is formed (shaped) in the rubber die 561. The nylon monomer is a monomer as a raw material for molding a nylon resin. The nylon casting device 56 includes a heating device for heating the nylon monomer in addition to the rubber die 561.

In the molded body formed by the nylon casting method, the lamination interface 21 is hardly formed. The molded body formed by the nylon casting method can be used in the disposing step as the preliminary molded body 2 constituting part of the resin molded article 1 together with the preliminary molded body 2 formed by another laminate shaping method. In this case, when the filling step and the cooling step are performed, the lamination interface 21 in the preliminary molded body 2 formed by another laminate shaping method is eliminated, and this preliminary molded body 2 and a preliminary molded body 2 formed by the nylon casting method are melted and joined at the boundary portion between the preliminary molded bodies 2.

In the nylon casting method, a nylon resin as a thermoplastic resin can be shaped.

### (Granular material bonding method)

As shown in Fig. 11, the preliminary molded body 2 used in the disposing step may be formed as part of the resin molded article 1 using a preliminary molding device 4A having a configuration similar to that of an electromagnetic wave molding device 4 described later. At this time, a preliminary molding die 3A in which a cavity 33 having the shape of the preliminary molded body 2 is formed and an electromagnetic wave generator 42A having the same configuration as an electromagnetic wave generator 42 described later are used. A method of forming the preliminary molded body 2 using the preliminary molding device 4A including the preliminary molding die 3A and the like is referred to as a granular material bonding method.

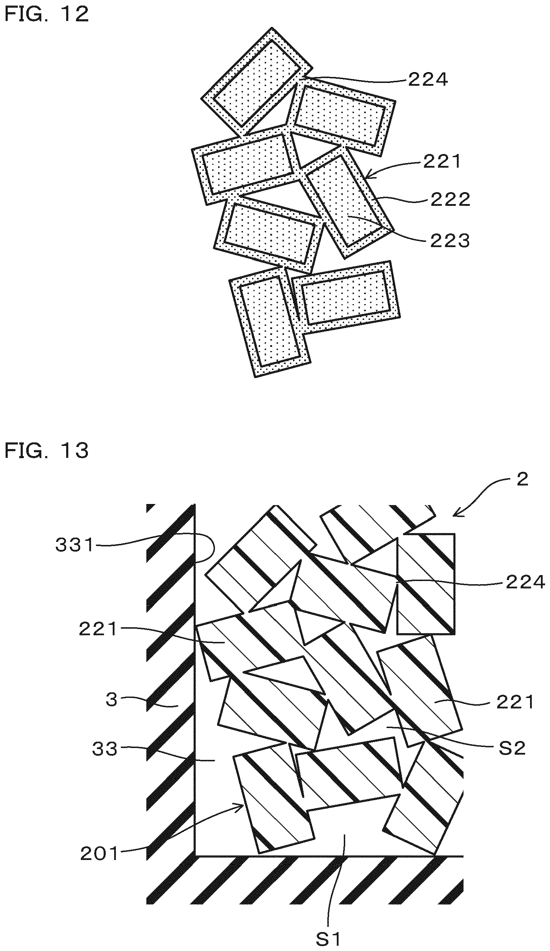

When the granular material bonding method is used, as shown in Fig. 12, the preliminary molded body 2 used in the disposing step is a granular material bonded body having a three-dimensional shape in which the interface 224 at which the granular materials 221 made of the granular thermoplastic resin material are in contact with each other is melted, and the granular materials 221 are bonded to each other with a gap interposed therebetween. A pellet having a maximum outer shape of 0.5 to 5 mm can be used for the granular material 221. The interface 224 in the granular material bonded body corresponds to the lamination interface 21 in the preliminary molded body 2.

The state in which the granular materials 221 are bonded to each other with a gap interposed therebetween refers to a state in which parts of the surface portions 222 of the granular materials 221 are bonded to each other and a gap is formed between the remaining portions of the surface portions 222 of the granular materials 221. In other words, the state in which the granular materials 221 are bonded to each other with a gap interposed therebetween refers to a state in which the granular materials 221 are bonded to each other to such an extent that the three-dimensional shape of the preliminary molded body 2 can be maintained in a state in which the granular materials 221 are not completely melted with each other and most of the surface shape of the granular materials 221 remains. Fig. 12 schematically illustrates a state in which the granular materials 221 are bonded to each other at the interface 224 of the surface portion 222 in an enlarged manner. The surface portion 222 of the granular material 221 refers to a portion excluding the core of the unmolten resin remaining in the central portion 223 of the granular material 221.

As a conventional molding method, when electromagnetic wave molding is performed without using the preliminary molded body 2, the cavity of the molding die may not be sufficiently filled with the granular thermoplastic resin material depending on the formation state of the cavity of the molding die. For example, it is assumed that when part of the molding surface of the molding die is disposed in an inclined manner with respect to the vertical direction, the granular thermoplastic resin material slides down the inclined molding surface and is deposited downward, and the granular thermoplastic resin material is not disposed as uniformly as possible in the entire cavity.

In such a case, it is effective to use the granular material bonded body for forming the resin molded article 1 by replacing part of the granular thermoplastic resin material with the granular material bonded body in the filling step and the cooling step. As shown in Fig. 13, in the filling step, the granular material bonded body as the preliminary molded body 2 is disposed in part of the cavity 33 of the molding die 3, and the granular thermoplastic resin material is disposed in the remaining portion of the cavity 33 of the molding die 3. Fig. 13 schematically shows an enlarged view of a state in which the preliminary molded body 2 is disposed in the cavity 33 of the molding die 3. In the cavity 33, an uneven gap S1 is formed between the molding surface 331 of the cavity 33 and the uneven surface 201 of the preliminary molded body (granular material bonded body) 2, and a gap S2 having a complicated shape is formed between the granular materials 221 of the preliminary molded body 2.

In the filling step, the granular material bonded body and the granular thermoplastic resin material in the cavity 33 of the molding die 3 of the electromagnetic wave molding device 4 are melted as the resin material 20, and the cavity 33 is filled with the resin material 20. In the cooling step, the molten resin material 20 is solidified, the resin material 20 is integrated so that the lamination interface 21 of the granular material bonded body disappears, and the resin molded article 1 to which the shape of the molding surface 331 of the molding die 3 is transferred is formed.

When the granular material bonding method is used, the electromagnetic wave generator 42 or the like of the electromagnetic wave molding device 4 can be used to form a granular material bonded body as the preliminary molded body 2. Therefore, the configuration of the device can be simplified to obtain the resin molded article 1 having required characteristics.

In the disposing step, only the preliminary molded body 2 formed of the granular material bonded body may be used, or the preliminary molded body 2 formed of the granular material bonded body and the preliminary molded body 2 formed of another forming method or the like may be used in combination.

(Granular material bonding method using another preliminary molding device 57)

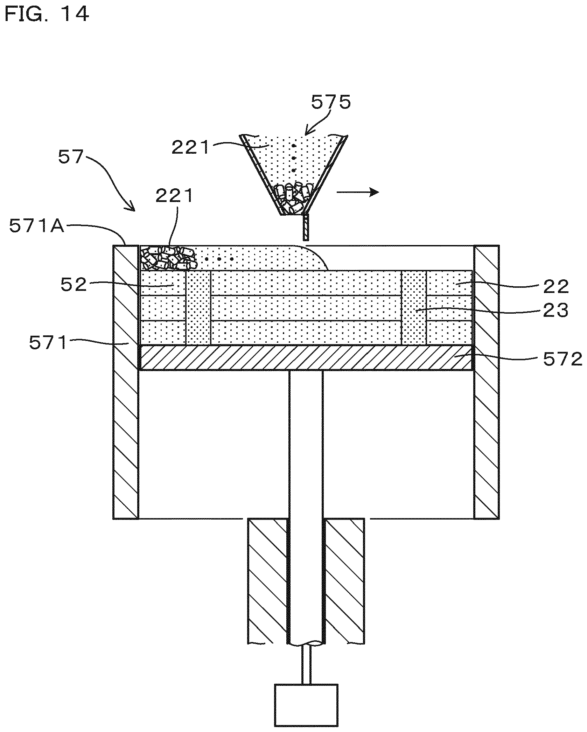

In the granular material bonding method, instead of using the preliminary molding device 4A, a preliminary molding device 57 that forms a granular material bonded body as the preliminary molded body 2 by laminating the granular material may be used. Specifically, as illustrated in Figs. 14 to 16, the preliminary molding device 57 forms the preliminary molded body 2 used for forming the resin molded article 1. The preliminary molding device 57 includes a stage frame 571, a stage 572, and a light radiation source 573. The stage frame 571 is formed in a frame shape having an upper end opening 571A vertically upward. The stage 572 is disposed inside the stage frame 571, and is configured to move up and down relative to the stage frame 571 along the vertical direction. On the stage 572, pellets as the granular material 221 are repeatedly spread in layers as the granular material layer 22 within a prescribed thickness range. The granular material 221 contains a resin and has a maximum outer shape within a range of 0.5 to 5 mm.

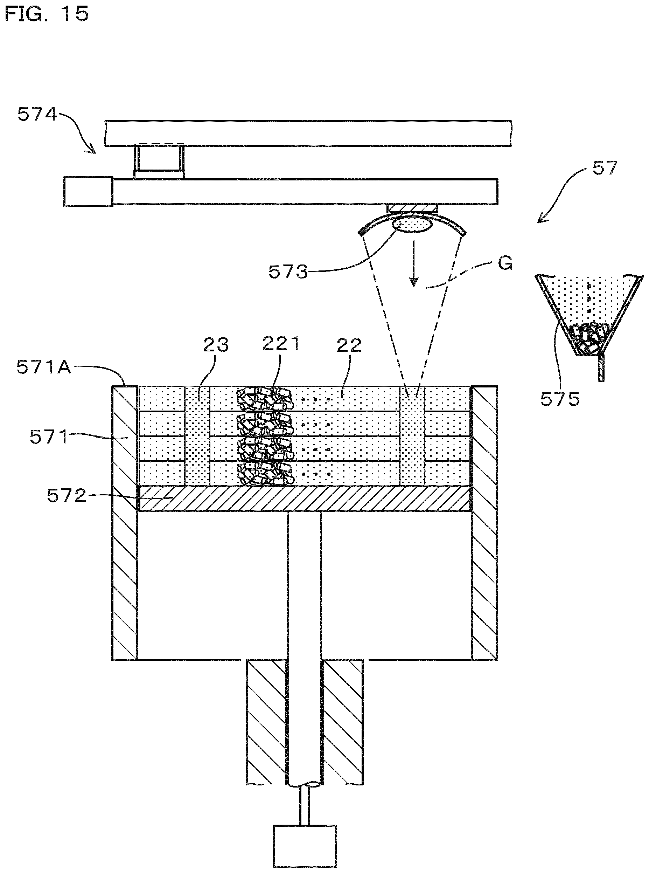

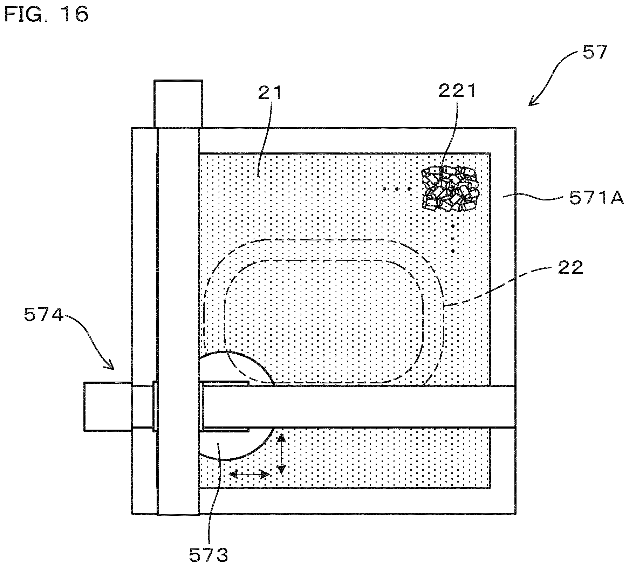

As shown in Figs. 15 and 16, the light radiation source 573 is configured to irradiate the granular material layer 22 on the stage 572 with the convergent light G while relatively moving the convergent light G with respect to the stage 572 so as to draw a planar shape in a horizontal direction orthogonal to the vertical direction. The preliminary molding device 57 is configured to repeatedly and alternately perform lamination of the granular material layer 22 on the stage 572 and radiation of the convergent light G by the light radiation source 573.

The light radiation source 573 is movable in a direction orthogonal to the vertical direction in which the stage 572 moves up and down by a plane moving mechanism 574. The preliminary molding device 57 includes a granular material feed unit 575 for feeding the granular material 221 onto the stage 572. The granular material feed unit 575 moves above the stage 572 and supplies the granular material 221 onto the stage 572 surrounded by the stage frame 571 to form the granular material layer 22.

In the preliminary molding device 57, the energy of light of the light radiation source 573, the moving speed of the light radiation source 573, and the like are adjusted, and the state of irradiating the granular material layer 22 with the convergent light G is controlled. As shown in Fig. 12, at the irradiation site 23 irradiated with the convergent light G of the light radiation source 573 in the granular material layer 22, the surface portion 222 of the granular material 221 in the granular material layer 22 is melted, and the interface 224 at which the surface portions 222 are in contact with each other are bonded to each other. The granular materials 221 in the granular material layers 22 adjacent to each other are also bonded to each other at the interface 224. The interface 224 in the granular material bonded body corresponds to the lamination interface 21 in the preliminary molded body 2. In this way, the plurality of granular materials 221 are bonded to each other, and the granular material bonded body as the preliminary molded body 2 is formed.

### (Other laminate shaping methods)

The preliminary molded body 2 can be formed (shaped) using various methods of laminating and shaping the resin material 20 of the thermoplastic resin other than the fused deposition modeling, the extrusion molding method, the inkjet method, the selective laser sintering, and the granular material bonding method described above.

For example, although not illustrated, the preliminary molded body 2 may be various solid materials disposed in the cavity 33 of the molding die 3 of the electromagnetic wave molding device 4, and the resin molded article 1 may be formed by performing the disposing step, the filling step, and the cooling step using the solid material. For example, in the disposing step, a solid resin material may be disposed in a vertical or inclined portion in the cavity 33 of the molding die 3, and a granular resin material may be disposed in the remaining portion of the cavity 33, and the resin molded article 1 may be formed by performing the filling step and the cooling step. The solid material in this case may be, for example, a material in which long resin strands by a fused deposition modeling are disposed side by side. In this case, by using the solid material, it is possible to prevent slippage of the granular resin material and to easily fill the entire cavity 33 with the resin material.

Although not illustrated, when the resin molded article 1 to be formed has a special shape such as a spiral shape that is difficult to be filled with a granular resin material, an elongated solid resin material can be wound around the outer periphery of the central axis portion of the molding die 3. In addition, part of the solid resin material can be locally heated and melted with a trowel or the like to prevent the solid resin material from falling from the central axis portion. When the central axis portion and the outer portion of the molding die 3 are combined, a state in which the resin material is disposed in the cavity 33 can be formed. In this case, by using an elongated solid resin material as a solid material, the entire cavity 33 can be easily filled with the resin material.

Although not illustrated, the solid material disposed in the cavity 33 of the molding die 3 can be deformed into a shape conforming to the shape of the cavity 33 by a simple heating device such as a trowel. For example, in a case where the cavity 33 or part of the cavity 33 has a curved surface shape, a method of deforming the solid can be used.

Although not illustrated, in a state where the die portions of the molding die 3 are opened, a granular resin material is disposed on the molding surface 331 of the cavity 33 of the die portion, and the granular resin materials are simply bonded to each other, so that the resin materials can be prevented from being displaced from the die portion. Then, the die portion in which the resin material is disposed and the other die portion are closed, and a state in which the resin material is disposed in the cavity 33 can be formed.

The preliminary molded body 2 disposed in the molding die 3 in the disposing step can have a near net shape having a shape close to the product shape of the resin molded article 1 to be formed (a shape conforming to the product shape). In this case, one preliminary molded body 2 having near net shape is disposed in the molding die 3 in the disposing step, and the entire preliminary molded body 2 is melted to form the resin molded article 1 in the filling step and the cooling step. When the shape of the resin molded article 1 to be formed is not so complicated, molding can be performed using one preliminary molded body 2.

The preliminary molded body 2 disposed in the molding die 3 in the disposing step can also be formed as a plurality of partial shapes obtained by dividing the resin molded article 1 to be formed into a plurality of parts. In this case, the plurality of preliminary molded bodies 2 may be formed by the same type of laminate shaping method, or may be formed by different types of laminate shaping methods. Alternatively, one of the preliminary molded bodies 2 may be formed by a laminate shaping method, and the other of the preliminary molded bodies 2 may be formed by an ultrasonic powder molding method or a nylon casting method.

When a plurality of laminate shaping methods is used in combination, the preliminary molded body 2 formed by the laminate shaping method suitable for fine molding can be disposed in a portion having a fine shape in the resin molded article 1 to be formed. In this case, the preliminary molded body 2 formed by the laminate shaping method, which has a high molding speed and can be formed at low cost, can be disposed in a portion of the resin molded article 1 to be formed having a simple shape.

### (Electromagnetic wave molding device 4)

As shown in Fig. 3, in the resin molding method of the present embodiment, the electromagnetic wave molding device 4 including the molding die 3, a vacuum pump 41, and the electromagnetic wave generator 42 is used. The molding die 3 has a cavity 33 in which the shape of the resin molded article 1 as a product is inverted. The vacuum pump 41 is for bringing the inside of the cavity 33 of the molding die 3 into a vacuum state. The electromagnetic wave generator 42 generates an electromagnetic wave to irradiate the molding die 3.

### (Molding die 3, vacuum pump 41)

As shown in Figs. 1 and 3, the molding die 3 of the present embodiment is configured by a rubber die made of a rubber material. As the rubber material, various rubbers can be used in addition to silicone rubber. The molding die 3 can be configured by a combination of a plurality of divided die portions 31 and 32. The molding die 3 is divided into a pair of die portions 31 and 32, and the cavity 33 for forming the resin molded article 1 is formed between a first die portion 31 and a second die portion 32 as the pair of die portions 31 and 32.

A vacuum port 34 to which a vacuum pump 41 for bringing the inside of the cavity 33 into a vacuum state lower than atmospheric pressure is connected is formed in one of the first die portion 31 and the second die portion 32. The vacuum port 34 of the present embodiment is formed in the second die portion 32. When the inside of the cavity 33 is brought into a vacuum state by the vacuum pump 41, a clamping force can be applied from the outside to the inside of the molding die 3. By this clamping force, the resin material 20 of the preliminary molded body 2 disposed in the cavity 33 and melted is pressed against the molding surface 331 of the cavity 33, and the resin molded article 1 in which the shape of the molding surface 331 of the cavity 33 is transferred to the surface is formed.

Since the molding die 3 is configured by a rubber die, when pressure acts from the outside to the inside of the molding die 3, the molding die 3 can be elastically deformed inward so as to reduce the volume of the cavity 33. Due to the elastic deformation of the molding die 3, the shape of the molding surface 331 of the cavity 33 can be effectively transferred to the resin molded article 1 formed in the cavity 33.

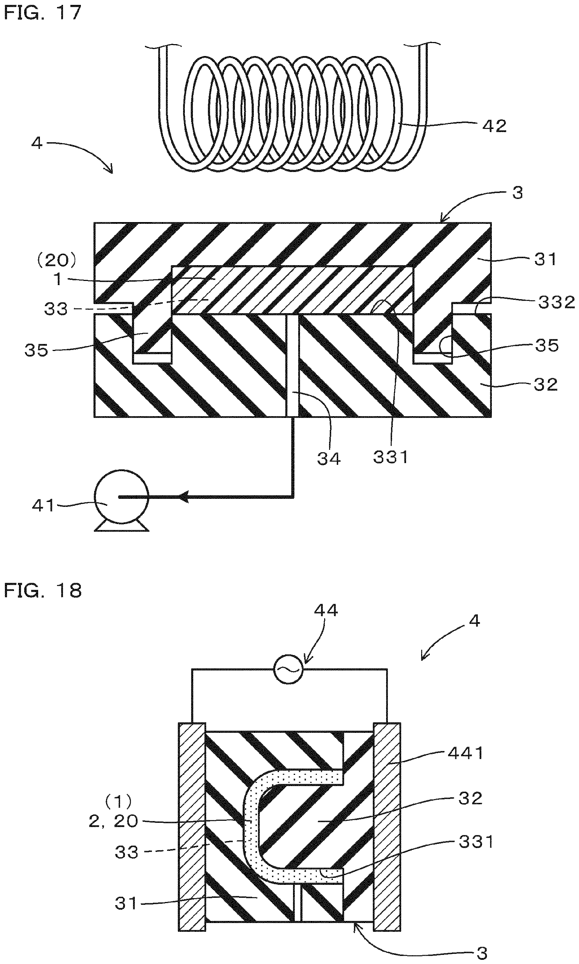

As illustrated in Fig. 17, the first die portion 31 and the second die portion 32 can have a slide structure so as to slidably approach each other to reduce the volume of the cavity 33. In this case, a guide portion 35 for relatively sliding the first die portion 31 and the second die portion 32 is formed. In this case, the first die portion 31 and the second die portion 32 come close to each other when the preliminary molded body 2 is disposed in the cavity 33, the inside of the cavity 33 is brought into a vacuum state, and the pressure in the cavity 33 is lower than the pressure outside the molding die 3. This reduces the volume of the cavity 33 and more effectively presses the resin material 20 of the molten preliminary molded body 2 in the cavity 33 against the molding surface 331 of the cavity 33.

As shown in Fig. 1, when the preliminary molded body 2 is disposed in the cavity 33, in a case where little gap is formed between the surface 201 of the preliminary molded body 2 and the molding surface 331 of the cavity 33, the first die portion 31 and the second die portion 32 can have a fixing structure that does not slide. On the other hand, a case where a certain gap is formed between the surface 201 of the preliminary molded body 2 and the molding surface 331 of the cavity 33 when the preliminary molded body 2 is disposed in the cavity 33, the first die portion 31 and the second die portion 32 can have a slide structure.

### (Production of molding die 3)

The molding die 3 made of a rubber die can be manufactured by transferring a master model of the resin molded article 1 which is a product to be formed. More specifically, a master model is disposed in a mold frame, and a rubber material is cast into a gap in the mold frame to solidify the rubber material. Thereafter, the solidified rubber material is cut, the master model is taken out from the inside, and a pair of die portions 31 and 32 made of the rubber material is formed. In addition, the position where the rubber material is cut is the dividing surface (parting line) 332 between the pair of die portions 31 and 32.

In addition, the die portions 31 and 32 constituting the molding die 3 using a rubber die can be manufactured separately using a master model. Specifically, when the pair of die portions 31 and 32 has a slidable structure, the respective die portions 31 and 32 can be produced separately in order to form the sliding guide portion 35 in each of the die portions 31 and 32.

The master model has a shape of a product, and can be produced by various methods. When the master model is manufactured by the laminate shaping method, the stepped surface by the lamination interface 21 of the three-dimensional object can be made a smooth surface by performing cutting, grinding, coating, and the like. For example, the master model can be formed by cutting or grinding a surface of a molded article formed into a three-dimensional shape by a laminate shaping method or the like. The master model can also be formed by applying a coating material or the like containing a resin to the surface of a molded article formed into a three-dimensional shape. The master model can also be a model obtained by repairing a defective portion in a resin molded article already used as a product.

The molding die 3 can also be directly produced by various laminate shaping methods using three-dimensional digital data (such as CAD data) of a product. For example, the molding die 3 can be produced by a stereolithography method in which a liquid resin cured by ultraviolet rays (UV) is irradiated with ultraviolet rays using three-dimensional digital data to form a layered three-dimensional object. The molding die 3 can also be produced by an inkjet method (material jetting method) or the like. Furthermore, when forming the molding die 3, the stepped surface formed according to the lamination interface 21 of the three-dimensional object can be formed into a smooth surface by performing cutting, grinding, coating, and the like.

Other than the rubber die, the molding die 3 can be configured by a resin die formed of a curable resin material, a cement die formed of a cement material, or a gypsum die formed of a gypsum material. Examples of the curable resin material include a thermosetting resin material and a photocurable resin material. The molding die 3 can be made of various other non-metallic materials having heat resistance.

### (Electromagnetic wave, electromagnetic wave generator 42)

As shown in Fig. 3, the electromagnetic wave used in the filling step of the present embodiment is an electromagnetic wave (near infrared ray) having a wavelength region of 0.78 to 2 µm, an electromagnetic wave (microwave) having a wavelength region of 0.01 to 1 m, or an electromagnetic wave (high frequency) having a wavelength region of 1 to 100 m. When the near infrared ray is used, a transparent or translucent rubber die or the like that easily transmits the near infrared ray is used as the molding die 3, and the thermoplastic resin preliminary molded body 2 in the molding die 3 can be heated and melted by the near infrared ray transmitted through the molding die 3. In this case, the transmittance of the near infrared ray in the molding die 3 can be made higher than the transmittance of the near infrared ray in the preliminary molded body 2. In other words, the absorption rate of the near infrared ray in the molding die 3 can be made lower than the absorption rate of the near infrared ray in the preliminary molded body 2.

When the microwave is used, a rubber die or the like having a small dielectric loss (dielectric loss) is used as the molding die 3, and the dielectric loss is generated in the preliminary molded body 2 of the thermoplastic resin in the molding die 3 by the microwave, so that the preliminary molded body 2 can be dielectrically heated and melted. The dielectric loss refers to an energy loss generated in an insulator when an alternating electric field is applied to the insulator. Heat is generated in the insulator due to this energy loss.

When the microwave is used, the dielectric power factor (dielectric dissipation factor, tanδ) of the molding die 3 can be made lower than the dielectric power factor of the preliminary molded body 2. Since the dielectric power factor of the molding die 3 is lower than the dielectric power factor of the preliminary molded body 2, a larger dielectric loss can be generated in the preliminary molded body 2 than in the molding die 3. When the microwave is used, the rubber die or the like having various color arrangements can be used.

In the filling step, the electromagnetic wave generator 42 that generates an electromagnetic wave is used. The electromagnetic wave generator 42 can be a halogen lamp or the like when generating the near infrared ray. In addition, the electromagnetic wave generator 42 can be a microwave oscillator or the like when generating the microwave. Furthermore, the electromagnetic wave generator 42 can be a high frequency oscillator or the like when generating a high frequency.

### (Dielectric heater 44)

As shown in Fig. 18, in the filling step, instead of the electromagnetic wave generator 42, a dielectric heater 44 that applies an alternating electric field to the resin material 20 in the cavity 33 of the molding die 3 and the molding die 3 by a high-frequency AC voltage applied to the pair of electrodes 441 may be used. More specifically, the dielectric heater 44 applies an alternating electric field to the resin material 20 in the cavity 33 and the molding die 3 by an AC voltage applied between a pair of electrodes 441 disposed on both sides of the molding die 3. The dielectric heater 44 uses a high frequency as an electromagnetic wave that generates an alternating electric field by the pair of electrodes 441. The frequency of the AC voltage by the dielectric heater 44 is a high frequency as an electromagnetic wave having a wavelength region of 1 m to 100 m.

The molding die 3 used together with the dielectric heater 44 has an insulating property that generates heat due to dielectric loss. When an alternating electric field is applied to the molding die 3 by the pair of electrodes 441 of the dielectric heater 44, at least one of the molding die 3 and the resin material 20 generates heat due to dielectric loss, and the resin material 20 is melted. The value of the dielectric loss is determined according to the type of substance as an insulator. The dielectric loss is determined according to the value of the dielectric dissipation factor tanδ.

In addition, a molding surface layer having a larger dielectric loss than a general portion which is another portion of the molding die 3 may be formed on the molding surface 331 of the cavity 33 in the molding die 3. In order to increase the dielectric loss, the molding surface layer may contain, for example, at least one substance selected from the group consisting of carbon black, graphite, silicon carbide, ferrite, barium titanate, graphite, and manganese dioxide.

The outer shape of the electrode 441 can be made larger than the outer shape of the molding die 3, and the entire molding die 3 can be disposed between the pair of electrodes 441. In this case, the positional relationship between the pair of electrodes 441 and the molding die 3 is fixed. On the other hand, the outer shape of the electrode 441 may be made smaller than the outer shape of the molding die 3, and part of the molding die 3 may be disposed between the pair of electrodes 441. In this case, the molding die 3 can be moved relative to the pair of electrodes 441 to sequentially melt the resin material 20 positioned in each part in the cavity 33 of the molding die 3.

### (Details of resin molding method)

In the resin molding method of the present embodiment, the preliminary molding step, the disposing step, the filling step, and the cooling step are performed to produce the resin molded article 1 of the thermoplastic resin. In the preliminary molding step, the three-dimensional preliminary molded body 2 in which the resin material 20 ejected from the nozzle 511, 521, 531 is laminated is formed using a laminate shaping method. The preliminary molded body 2 is formed in a three-dimensional shape made of the resin material 20 of a laminated thread-like or granular thermoplastic resin. A stepped or uneven surface shape is repeatedly formed on the surface 201 of the preliminary molded body 2 by laminating the resin material 20. In addition, the lamination interface 21 is formed between the laminated resin materials 20 by the surfaces of the resin materials 20 contacting.

Next, in the disposing step, the three dimensionally laminated and formed preliminary molded body 2 is disposed in the molding die 3. At this time, the pair of die portions 31 and 32 constituting the molding die 3 are opened, and the preliminary molded body 2 is disposed in the cavity 33 between the pair of die portions 31 and 32. Examples of the preliminary molded body 2 include a laminate of the resin material 20 in a thread-like shape and a laminate of the resin material 20 in a granular shape, depending on the type of the laminate shaping method used.

Other than one preliminary molded body 2 disposed, a plurality of preliminary molded bodies 2 can also be disposed in the cavity 33. When the plurality of preliminary molded bodies 2 is disposed in the cavity 33, any of the preliminary molded bodies 2 can be formed by an ultrasonic powder molding method or a nylon casting method other than by the laminate shaping method.

As shown in Fig. 2, when the preliminary molded body 2 is disposed in the cavity 33 of the molding die 3, a stepped or uneven gap S1 is formed between the molding surface 331 of the cavity 33 and the stepped or uneven surface 201 of the preliminary molded body 2. The stepped or uneven gap S1 is formed as the lamination interface 21 is formed in the preliminary molded body 2.

After the pair of die portions 31 and 32 is closed with the preliminary molded body 2 disposed in the cavity 33, the inside of the cavity 33 is evacuated from the vacuum port 34 of the second die portion 32 by the vacuum pump 41. At this time, the gap in the cavity 33 is in a vacuum state. The molding die 3 is disposed under a pressure environment of atmospheric pressure or more. Since the pressure outside the molding die 3 is higher than the pressure inside the molding die 3 (cavity 33), a clamping force can be applied from the outside to the inside of the molding die 3.

When the inside of the molding die 3 is evacuated in the filling step, the residual gas in the molding die 3 is extracted to the outside of the molding die 3 through the gaps S1 and S2 formed in the molding die 3 by the preliminary molded body 2. Specifically, the residual gas can be effectively extracted by utilizing the preliminary molded body 2 as a solid having the lamination interface 21.

When the preliminary molded body is disposed in the cavity 33, in a case where the molding surface 331 of the cavity 33 and the entire surface of the preliminary molded body are in close contact with each other, there is no escape path for the gas (moisture or the like) generated when the resin material is melted, and the vacuuming in the cavity 33 is insufficient, so that voids (air bubbles) may remain in the resin molded article to be formed. On the other hand, in the filling step or the like of the present embodiment, when the inside of the cavity 33 is evacuated by the vacuum pump 41, the gap S1 is formed by the molding surface 331 of the cavity 33 and the stepped or uneven surface 201 of the preliminary molded body 2. The gap S2 is formed between the resin materials 20 constituting the preliminary molded body 2.

When the cavity 33 is evacuated, the gap S1 due to the stepped or uneven surface 201 of the preliminary molded body 2 and the gap S2 between the resin materials 20 constituting the preliminary molded body 2 serve as a passage for a residual gas in the cavity 33 and an escape path for a gas generated when the resin material 20 is melted. As a result, the cavity 33 can be sufficiently evacuated, and voids can be prevented from remaining in the resin molded article 1 to be formed.

In the disposing step, when the shape of the resin molded article 1 to be formed is complicated, a plurality of types of preliminary molded bodies 2 can be disposed in the molding die 3 along the shape of each portion of the cavity 33 of the molding die 3. In the disposing step, together with the preliminary molded body 2, a powder material of a thermoplastic resin having the same component as the thermoplastic resin constituting the preliminary molded body 2 can be disposed in the cavity 33. This powder material can be used, for example, for the purpose of filling a gap formed between the molding surface 331 of the cavity 33 and the surface 201 of the preliminary molded body 2 to supplement the shape of part of the resin molded article 1 to be formed. Micropellets can be used as the powder material.

Next, in the filling step, the electromagnetic wave generator 42 generates a microwave which is an electromagnetic wave having a wavelength region of 0.01 to 1 m, and irradiates the molding die 3 with the microwave. At this time, since the dielectric power factor of the rubber material constituting the molding die 3 is lower than the dielectric power factor of the thermoplastic resin material constituting the preliminary molded body 2, the preliminary molded body 2 absorbs more microwave than the molding die 3. As a result, the preliminary molded body 2 is heated to a higher temperature and melted by the microwave transmitted through the molding die 3.

When the preliminary molded body 2 is melted, the pressure in the cavity 33 is lower than the pressure outside the molding die 3, so that the molding die 3 is elastically deformed so as to be slightly collapsed inward. The molten resin material 20 flows into the gap S1 between the molding surface 331 of the cavity 33 and the surface 201 of the preliminary molded body 2 and the gap S2 between the resin materials 20 constituting the preliminary molded body 2. As a result, the lamination interface 21 between the laminated resin materials 20 is eliminated, the gaps S1 and S2 in the cavity 33 are filled, and the cavity 33 is filled with the molten resin material 20. In the filling step, vacuuming of the inside of the cavity 33 by the vacuum pump 41 can be continued.

In addition, in the case of using the molding die 3 having a slide structure in which the pair of die portions 31 and 32 is slidable so as to approach each other, when the preliminary molded body 2 in the cavity 33 melts, the pressure in the cavity 33 is lower than the pressure outside the molding die 3, so that the pair of die portions 31 and 32 approaches each other and the reduced cavity 33 is filled with the molten resin material 20. In this case, the gaps S1 and S2 in the cavity 33 are more effectively filled with the molten resin material 20, and the molten resin material 20 is more effectively pressed against the molding surface 331 of the cavity 33.

In a case where the preliminary molded body 2 and the powder material are disposed in the cavity 33, when the preliminary molded body 2 and the powder material are melted by the microwave, the three-dimensional shape of the preliminary molded body 2 is complemented by the powder material. In a case where a plurality of types of preliminary molded bodies 2 is disposed in the cavity 33, the plurality of types of preliminary molded bodies 2 is heated and melted by the microwave, and the preliminary molded bodies 2 are joined at the boundary portion (interface portion). The boundary portion between the preliminary molded bodies 2 refers to a portion where the preliminary molded bodies 2 face each other in the cavity 33.

Next, in the cooling step, the generation of the electromagnetic wave by the electromagnetic wave generator 42 is stopped, and the vacuuming in the cavity 33 by the vacuum pump 41 is continued. The pressure outside the molding die 3 is higher than the pressure inside the cavity 33, so that a state in which the clamping force acts on the pair of die portions 31 and 32 is maintained. In the cooling step, the molding die 3 with the cavity 33 filled with the resin material 20 is allowed to stand, and the molding die 3 and the resin material 20 in the cavity 33 are cooled by natural cooling or forced cooling. Then, the molten resin material 20 is cooled and solidified in the molding die 3.

When the filling step and the cooling step are performed, the resin molded article 1 in which the resin material 20 is integrated is formed in the molding die 3 so that the lamination interface 21 between the resin materials 20 in the preliminary molded body 2 disappears. When the filling step and the cooling step are performed, the resin molded article 1 having a surface to which the shape of the molding surface 331 of the cavity 33 is smoothly transferred is formed. When the molding surface 331 of the cavity 33 has a shape such as a emboss process or an irregularity process, the shape can be transferred to the surface of the resin molded article 1. The transfer of the molding surface 331 of the cavity 33 can also make the surface of the resin molded article 1 mirror surface.

In a case where the dielectric heater 44 is used instead of the electromagnetic wave generator 42 in the filling step, a high-frequency alternating electric field is applied from the pair of electrodes 441 of the dielectric heater 44 to the molding die 3, and at least one of the molding die 3 and the resin material 20 in the cavity 33 generates heat due to dielectric loss caused by the alternating electric field. When the molding die 3 generates heat, the resin material 20 in the cavity 33 is heated by heat transfer from the molding die 3. When the molding surface layer is formed in the molding die 3, the molding surface layer may generate heat by an alternating electric field, and the resin material 20 in the cavity 33 may be heated by heat transfer from the molding surface layer.

### (Operation and effect)

In the resin molding method of the present embodiment, the preliminary molded body 2 laminated and formed in a three-dimensional shape is used as a raw material, and the resin molded article 1 is formed in the molding die 3 using the electromagnetic wave. The preliminary molded body 2 having the lamination interface 21 can be formed by various laminate shaping methods. In the laminate shaping method, it is possible to form a resin without using granular micropellets smaller than solid pellets. Therefore, when the preliminary molded body 2 is formed by the laminate shaping method, it is possible to save time and effort for producing the micropellet.

While the particle size of a normal pellet is about 3 to 5 mm, the particle size of a micropellet is about 0.5 to 1 mm. The micropellets are atomized so that the cavity 33 of the molding die 3 is easily filled the micropellets when the electromagnetic wave molding is performed.

The molding die 3 used in the resin molding method of the present embodiment is produced using a non-metallic material such as a rubber material, a curable resin material, a cement material, or a gypsum material. Compared with the case of producing a molding die of a metal material for which cutting or the like is required, producing of the molding die 3 using a non-metallic material is easy because cutting or the like is not required. The resin molding method of the present embodiment is also suitable for production of a small lot (small amount) because the molding die 3 is easily produced.

Further, in the resin molded article 1 obtained by the resin molding method using the preliminary molded body 2, characteristics that cannot be obtained in the resin molded article by the laminate shaping method can be obtained. Specifically, according to the resin molding method of the present embodiment, it is possible to solve the problems in the resin molded article formed by the laminate shaping method, such as the problem that the strength in the laminating direction is low due to the presence of the lamination interface 21, the problem that the density of the resin molded article is low, and the problem that the surface of the resin molded article has steps or unevenness.

In the preliminary molded body 2 formed by the laminate shaping method, the lamination interface 21 in which the surfaces of the resin materials 20 are combined is formed between the laminated resin materials 20 according to the number of laminated layers. When the molded preliminary molded body 2 is pulled in the laminating direction of the resin material 20, peeling easily occurs at the lamination interface 21. Therefore, the strength in the laminating direction of the preliminary molded body 2 is lower than the strength in the other directions of the preliminary molded body 2.

In order to cope with this problem of strength, since the resin material 20 is integrated such that the lamination interface 21 between the resin materials 20 in the preliminary molded body 2 disappears, a trace of lamination of the resin material 20 is hardly recognized in the resin molded article 1. In the resin molded article 1, it is possible to eliminate a strength imbalance such as a low strength against a force applied from a specific direction. As a direction in which the resin materials 20 are combined, the laminating direction is defined so that the thread-like resin material 20 is formed in a direction orthogonal to the extending direction of the resin material 20, and the granular resin material 20 is formed in at least three directions around the resin material 20.

In the preliminary molded body 2 formed by the laminate shaping method, the gap S2 is formed between the laminated resin materials 20. This gap S2 will be present as an air gap in the preliminary molded body 2. The presence of this gap S2 reduces the density of the preliminary molded bodies 2 and reduces the strength of the preliminary molded bodies 2.

In order to cope with this problem of density, the resin material 20 is integrated such that the lamination interface 21 between the resin materials 20 in the preliminary molded body 2 is eliminated, whereby the gap S2 between the resin materials 20 is filled. Then, the density of the resin material 20 constituting the resin molded article 1 increases, and the strength of the resin molded article 1 increases.

On the surface 201 of the preliminary molded body 2 formed by the laminate shaping method, steps or unevenness are formed by the presence of the lamination interface 21 in the preliminary molded body 2. Due to the presence of the steps or unevenness, the surface 201 of the preliminary molded body 2 is not excellent in design appearance.

In order to cope with the problem of the design appearance, the resin material 20 is integrated such that the lamination interface 21 between the resin materials 20 in the preliminary molded body 2 is eliminated, whereby a step or unevenness due to the resin material 20 disposed on the surface 201 of the preliminary molded body 2 is almost eliminated. The design appearance of the surface of the resin molded article 1 can be improved.

Specifically, when shaping (molding) a shaped article by a fused deposition modeling, in consideration of maintaining the design appearance and strength of the shaped article, the resin material 20 to be ejected from the nozzle 511 is preferably as thin as possible. However, when the resin material 20 to be ejected from the nozzle 511 is thinned, the molding speed of the shaped article is reduced.

In the preliminary molding step of the resin molding method of the present embodiment, the resin material 20 to be ejected from the nozzle 511 of the fused deposition modeling device 51 can be thickened. In the filling step and the cooling step, the preliminary molded body 2 is formed again to obtain the resin molded article 1. As a result, the molding speed (molding time) of the resin molded article 1 can be increased without deteriorating the design appearance and strength.

In the conventional method of melting the powder resin material disposed in the molding die 3 by the electromagnetic wave to form a resin molded article, it is difficult to fill the cavity 33 of the molding die 3 with the micropellets up to the end thereof when forming a resin molded article having a cylindrical shape (hollow shape), a deep standing wall, a rib, or the like. In addition, it is also difficult to form a portion having a complicated shape into which the micropellets are difficult to spread.

In the resin molding method of the present embodiment, since the electromagnetic wave molding using the preliminary molded body 2 is performed, it is possible to form a shape that was difficult to obtain by the electromagnetic wave molding using the powder resin material. Further, the resin molded article 1 having a thick shape that was difficult to fill with the micropellets can also be accurately formed by the electromagnetic wave molding using the preliminary molded body 2.

In addition, for example, even for a type of resin material 20 for which it is difficult to produce micropellets, such as a thermoplastic resin material having low hardness and a thermoplastic elastomer (TPE) having intermediate properties between rubber and resin, the electromagnetic wave molding is performed using the preliminary molded body 2 formed by a conventional laminate shaping method, whereby the resin molded article 1 having almost no lamination interface 21 can be obtained.

As described above, according to the resin molding method of the present embodiment, the use amount of micropellets can be reduced, and the resin molded article 1 having required mechanical characteristics can be formed.

The present disclosure is not limited only to the embodiments, and further different embodiments can be configured without departing from the gist of the present disclosure. Furthermore, the present disclosure includes various modifications, modifications within an equivalent range, and the like. Furthermore, combinations, forms, and the like of various components assumed from the present disclosure are also included in the technical idea of the present disclosure.

## Claims

1. A resin molding method comprising:
a disposing step of disposing one or a plurality of preliminary molded bodies formed by laminating a material in a three-dimensional shape in a molding die;
a filling step of heating and melting the preliminary molded body by an electromagnetic wave transmitted through the molding die or an alternating electric field as an electromagnetic wave applied by a pair of electrodes, and filling the molding die with a molten material; and
a cooling step of cooling and solidifying the molten material in the molding die to form a resin molded article in the molding die in which the material is integrated such that a lamination interface of the preliminary molded body disappears.

2. The resin molding method according to claim 1, wherein
at least one of the preliminary molded bodies used in the disposing step has a three-dimensional shape made of a laminated thread-like or granular thermoplastic resin material, and wherein
the filling step and the cooling step includes forming the resin molded article to which a shape of a molding surface of the molding die is transferred.

3. The resin molding method according to claim 1, wherein
at least one of the preliminary molded bodies used in the disposing step includes a three-dimensionally shaped granular material bonded body whose interface at which granular materials of a granular thermoplastic resin material are in contact with each other, and are bonded to each other after being melted with a gap interposed therebetween, and wherein
the filling step and the cooling step includes forming the resin molded article to which the shape of the molding surface of the molding die is transferred.

4. The resin molding method according to any one of claims 1 to 3, wherein
the disposing step includes disposing the plurality of preliminary molded bodies in the molding die, and wherein
the filling step and the cooling step includes forming the resin molded article in which a boundary portion between the plurality of preliminary molded bodies is joined.

5. The resin molding method according to any one of claims 1 to 4, wherein
the disposing step includes disposing the preliminary molded body and a powder material in the molding die, and wherein
the filling step and the cooling step includes melting the preliminary molded body and the powder material, and supplementing the three-dimensional shape of the preliminary molded body with the powder material to form the resin molded article.

6. The resin molding method according to any one of claims 1 to 5, further comprising a preliminary molding step of forming one or a plurality of the preliminary molded bodies before the disposing step.

7. The resin molding method according to claim 6, wherein the preliminary molding step includes forming at least one of the preliminary molded bodies by a fused deposition modeling in which a filament made of an elongated thermoplastic resin is ejected in a state of being heated and melted to be laminated in a three-dimensional shape.

8. The resin molding method according to claim 6, wherein the preliminary molding step includes forming at least one of the preliminary molded bodies by an extrusion molding method in which a thread-like resin material after heating and melting a solid or a powder and granular material of a thermoplastic resin is extruded from an extrusion molding device and laminated in a three-dimensional shape.

9. The resin molding method according to claim 6, wherein the preliminary molding step includes forming at least one of the preliminary molded bodies by an inkjet method in which a liquid material is dropped and laminated in a three-dimensional shape.

10. The resin molding method according to claim 6, wherein the preliminary molding step includes melting an interface at which granular materials made of a granular thermoplastic resin material are in contact with each other to form a three-dimensionally shaped granular material bonded body as at least one of the preliminary molded bodies in which the granular materials are bonded to each other with a gap interposed therebetween.

11. The resin molding method according to claim 10, wherein the preliminary molding step includes radiating or applying an electromagnetic wave to the granular materials disposed in the preliminary molding die to form the granular material bonded body.

12. The resin molding method according to claim 10, wherein the preliminary molding step includes irradiating the granular materials laminated on a stage with light to form the granular material bonded body.

13. The resin molding method according to any one of claims 6 to 12, wherein the preliminary molding step includes forming any one of the plurality of preliminary molded bodies by a selective laser sintering in which a powder material is sintered by heating to shape the sintered powder material into a three-dimensional shape.

14. The resin molding method according to any one of claims 6 to 12, wherein the preliminary molding step includes forming any one of the plurality of preliminary molded bodies by an ultrasonic powder molding method in which powder is melted by a horn that ultrasonically vibrates and an ultrasonic molding die is filled with melted powder.

15. The resin molding method according to any one of claims 6 to 12, wherein the preliminary molding step includes forming any one of the plurality of preliminary molded bodies by a nylon casting method in which a liquid nylon monomer is polymerized in a rubber die.

16. The resin molding method according to any one of claims 1 to 15, wherein the molding die is formed of a rubber die made of a rubber material, a resin die made of a curable resin material, a cement die made of a cement material, or a gypsum die made of a gypsum material.

17. The resin molding method according to any one of claims 1 to 16, wherein the filling step and the cooling step includes filling the molding die in a vacuum state with the molten material, and applying pressure from an outside to an inside of the molding die.

18. The resin molding method according to any one of claims 1 to 17, wherein
the molding die includes a plurality of divided die portions, wherein
a cavity for forming the resin molded article is formed between the plurality of die portions, and wherein
the filling step includes bringing the plurality of die portions close to each other when the preliminary molded body melts, and filling the reduced cavity with the molten material.

19. The resin molding method according to any one of claims 1 to 18, wherein the filling step includes vacuuming an inside of the molding die, and extracting a gas in the molding die to an outside of the molding die through a gap formed in the molding die by the preliminary molded body.
